# EUROPÄISCHE PATENTSCHRIFT

(11) **EP 1 914 097 B1**
(45) Veröffentlichungstag und Bekanntmachung des Hinweises auf die Patenterteilung: **10.03.2010**
(21) Anmeldenummer: 07016984.2
(22) Anmeldetag: 30.08.2007
(51) Int. Cl.: B60J 7/02

(54) **Rahmen für ein Kraftfahrzeugdach**
Framework for a motor vehicle roof
Cadre pour un toit de véhicule automobile

(30) Priorität: 07.09.2006 DE 102006042031; 28.09.2006 DE 102006046122
(43) Veröffentlichungstag der Anmeldung: 23.04.2008
(73) Patentinhaber: Webasto AG, 82131 Stockdorf (DE); LANXESS Deutschland GmbH, 51369 Leverkusen (DE)
(72) Erfinder: Mathias, Rainer, 82327 Tutzing (DE); Pollak, Martin, 82178 Puchheim (DE); Koch, Boris, 42929 Wermelskirchen (DE)

(56) Entgegenhaltungen:
- EP-A- 1 138 536
- EP-A- 1 227 031
- DE-A1- 4 012 635
- DE-A1- 10 135 406
- DE-A1- 19 821 694
- DE-U1- 20 317 140

## Beschreibung

Die Erfindung betrifft einen Rahmen für ein Fahrzeug-Schiebedach bzw. -Schiebehebedach mit den Merkmalen des Oberbegriffs des Patentanspruchs 1.

Ein derartiger Rahmen ist beispielsweise aus der DE 203 17 140 U1 bekannt und als Kunststoff-Spritzgießteil ausgebildet, das mithin aus einem Thermoplasten hergestellt ist und das ein Rahmenvorderteil und zwei Seitenholme aufweist, welche einstückig ausgeführt sind. An den Seitenholmen sind Führungsschienen integriert, an denen zum wahlweisen Verschließen bzw. zumindest teilweisen Freigeben einer Dachöffnung ein Deckelelement des betreffenden Schiebedachs bzw. Schiebehebedachs geführt ist. Zur Betätigung des Deckelelementes kann im Bereich des Rahmenvorderteils ein Antriebsmotor angeordnet sein. Durch die Ausführung als Kunststoff-Spritzgießteil und die damit verbundene Formgebungsvariabilität können bei einem derartigen Rahmen eine Vielzahl von Funktionen direkt integriert werden.

Rahmen der vorstehend beschriebenen Art können entweder von oben, d. h. von der Fahrzeugaußenseite aus, oder auch von innen, d. h. von der Fahrzeuginnenseite aus, mit der betreffenden Fahrzeugkarosserie verbunden werden. Insbesondere bei einem von außen auf die Fahrzeugkarosserie montierten Rahmen werden hohe Anforderungen an die Steifigkeit des Rahmens selbst gestellt, welche bei einem Rahmen aus thermoplastischem Kunststoff gegebenenfalls nicht erfüllt werden können. Die Steifigkeitsanforderungen müssen dann durch entsprechende konstruktive Maßnahmen in den Dachbereichen, auf die der Rahmen aufgesetzt wird, kompensiert werden.

Des Weiteren ist es aus der Praxis bekannt, von außen auf eine Fahrzeugkarosserie zu montierende Schiebedach- bzw. Schiebehebedachrahmen mit einem als Tiefziehblech ausgebildeten Rahmenbasiselement zu versehen, das in einstückiger Weise ein Rahmenvorderteil und Rahmenseitenholme umfasst. Ein derartiger Rahmen, der materialbedingt gegenüber einem Kunststoffrahmen ein höheres Gewicht hat und herstellungsbedingt begrenzte Formgebungsmöglichkeiten bietet, wird in der Regel mit weiteren strukturellen Blechelementen versehen. Des Weiteren besteht bei einem solchen Blechrahmen ein hoher Investitionsbedarf auf Herstellerseite. Auch sind die Möglichkeiten einer Funktionsintegration beschränkt. Des Weiteren muss ein aufwändiger Korrosionsschutz realisiert werden.

Des Weiteren ist beispielsweise aus der DE 198 21 694 A1 ein Schiebedachrahmen bekannt, der ein mehrteiliges Rahmenbasiselement aufweist. Das Rahmenbasiselement umfasst ein Rahmenvorderteil, das aus Kunststoff bestehen kann, sowie in der Regel aus Aluminium bestehende Seitenholme zur Führung eines Dachdeckelelementes. Bei einer derartigen modulartigen Bauweise des Schiebedachsrahmens müssen in den Übergangsbereichen zwischen dem aus Kunststoff gefertigten Rahmenvorderteil und den als Aluminiumstrangpressprofile ausgebildeten Rahmenseitenholmen aufwändige Abdichtmaßnahmen getroffen werden.

EP 1 138 356 A offenbart einen Rahmen für ein Fahrzeug-Schiebedach mit den Merkmalen des Oberbegriffs des Anspruchs 1.

Der Erfindung liegt die Aufgabe zugrunde, einen Rahmen der einleitend genannten Gattung zu schaffen, der sich durch ein geringes Gewicht auszeichnet, eine hohe Eigensteifigkeit hat und mit geringen Kosten herstellbar ist.

Diese Aufgabe ist erfindungsgemäß durch den Rahmen mit den Merkmalen des Patentanspruchs 1 gelöst.

Der Kern der Erfindung besteht mithin darin, dass ein Rahmen realisiert wird, der mit einem das Rahmenbasiselement darstellenden Trägerelement versehen ist, das einerseits ein Kunststoffspritzgießteil darstellt und andererseits mindestens ein von einem Einlegeteil gebildetes Verstärkungselement aufweist. Das Verstärkungselement wird zur Ausbildung des Verbundbauteils direkt bei der Formgebung des Spritzgießteils in das Rahmenbasisteil integriert. Der Rahmen nach der Erfindung ist also mit einem als Verbundbauteil ausgebildeten Rahmenbasiselement versehen, in dem ein Verbund aus dem spritzgegossenen Kunststoff und dem Werkstoff des Einlegeteils vorliegt.

Insbesondere kann das Einlegeteil aus Metall gefertigt sein und ein dünnwandiges Blech darstellen. In diesem Fall ist das Einlegeteil insbesondere ein Tiefziehteil, so dass sich bei der Fertigung des erfindungsgemäßen Rahmens nicht nur die spezifischen Eigenschaften der eingesetzten Werkstoffe sondern auch die beiden kostengünstig realisierbaren Verarbeitungsverfahren Metall-Tiefziehen und Spritzgießen ergänzen. Es resultiert somit ein von dem Rahmenbasiselement gebildetes Bauteil mit zuverlässigen, reproduzierbaren und geringen Fertigungstoleranzen. Die Herstellung erfolgt insbesondere derart, dass ein dünnwandiges, tiefgezogenes, gestanztes und in sich noch instabiles Blechteil bzw. -profil in das betreffende Spritzgießwerkzeug eingesetzt wird und die Kunststoffstruktur mit einem geeigneten Werkstoff, d. h. mit einem Thermoplasten oder auch einem Duroplasten, nach einem in üblicher Weise ausgeführten Spritzgießverfahren an das Blechteil angespritzt wird, was das Blechteil und damit die Gesamtkonstruktion versteift. Durch das Anspritzen der Kunststoffstruktur an das als Verstärkungselement dienende Einlegeteil kann also die dünnwandige Blechkonstruktion des Einlegeteils effektiv stabilisiert werden.

Denkbar ist es aber auch, das Einlegeteil aus einem Kohlefaserwerkstoff, einem faserverstärkten Thermoplasten oder einem faserverstärkten Duroplasten zu fertigen, was hinsichtlich des Gewichts des resultierenden Bauteils vorteilhaft ist. Als Faserverstärkung des Duroplasten bzw. des Thermoplasten können beispielsweise Kohle-, Aramid- oder Glaswerkstoffe in Form von Geweben, Rovings oder Matten eingesetzt werden.

Der Rahmen nach der Erfindung stellt somit ein Konstruktion dar, die durch die Integration des mindestens einen Einlegeteils und der mit diesem verbundenen Kunststoffstruktur eine hohe Eigensteifigkeit aufweist, die den hohen Anforderungen genügt, die im Bereich von Fahrzeugkarosserien und insbesondere im Bereich von Fahrzeugdächern gestellt werden.

Der Rahmen nach der Erfindung stellt insbesondere einen Schiebedachrahmen dar, der von der Fahrzeugaußenseite, d. h. von oben auf einen Fahrzeugaufbau augesetzt wird.

Dadurch, dass das Rahmenbasiselement als Kunststoffspritzgießteil ausgebildet ist, bietet sich die Möglichkeit, vielfältige Zusatzfunktionalitäten an dem Rahmenbasiselement zu integrieren. Diese werden beispielsweise durch Befestigungselemente, Lagerstellen, Schnapphaken, Schraubverbindungen, Kabelklemmen und/oder dergleichen gebildet. Hierdurch können aufwändige Nachbearbeitungs- und Montageprozesse eingespart werden.

Bei einer speziellen Ausführungsform des Rahmens nach der Erfindung, ist die zumindest teilweise profilartige Struktur des Verstärkungselements durch eine in dessen Profilierung eingreifende Rippenstruktur des spritzgegossenen Rahmenbasisteils bzw. -elementes stabilisiert und verstärkt.

Bei einer bevorzugten Ausführungsform des Rahmens nach der Erfindung ist jeder der Seitenholme des Rahmenbasiselementes mit mindestens einem Einlegeteil mit Profilierung versehen, in welche eine Rippenstruktur des spritzgegossenen Rahmenbasiselementes eingreifen kann. Das Einlegeteil erstreckt sich insbesondere in einem Bereich zwischen der jeweiligen A-Säule und der jeweiligen B-Säule des betreffenden Kraftfahrzeugs, auf das der Rahmen aufgesetzt wird. Insbesondere in diesen Bereichen des Daches werden hohe Anforderungen an das Crash-Verhalten eines Kraftfahrzeugs gestellt. Das Einlegeteil kann sich aber auch jeweils über die gesamte Länge der Seitenholme erstrecken.

Die Rippenstruktur, die in die Profilierung des jeweiligen Einlegeteils eingreift, stellt insbesondere eine Kreuz- und/oder Zickzackrippenstruktur dar. Eine solche Struktur wirkt dem Knickbestreben des Einlegeteils besonders wirkungsvoll entgegen. Grundsätzlich ist aber ein beliebiges Rippenmuster möglich.

Zur Verankerung des Einlegeteils an dem Kunststoff des Rahmenbasiselementes kann dieses im Bereich mindestens eines seitlichen Randes des Einlegeteils bzw. der Einlegeteile kederartig ausgebildet sein, so dass der betreffende Rand des Einlegeteils von dem Kunststoffwerkstoff übergriffen ist. Alternativ oder zusätzlich kann das Rahmenbasiselement im Bereich der Ränder des Einlegeteils bzw. der Einlegeteile auch mindestens eine den betreffenden Rand übergreifende, einstückig ausgebildete Kunststoffklammer umfassen. Die Verankerungselemente können also in einem Prozessschritt beim Spritzgießen des Rahmenbasiselements mit ausgeformt werden.

Des Weiteren ist es vorteilhaft, wenn das mindestens eine Einlegeteil an seiner Basis Löcher aufweist, die jeweils als Ankerpunkt für den Kunststoff des Rahmenbasiselementes dienen. Bei dem Spritzgießprozess tritt dann der in das betreffende Spritzgießwerkzeug eingebrachte Werkstoff durch die Löcher des betreffenden Einlegeteils hindurch, wodurch das Einlegeteil an dem Kunststoff verankert wird.

Das Einlegeteil kann teilweise freiliegen oder auch vollständig von dem Kunststoff des Rahmenbasiselementes aufgenommen sein. In ersterem Fall kann das Einlegeteil insbesondere als Basis zur Befestigung weiterer Strukturelemente des Rahmens dienen. Beispielsweise können Einlegeteile der beiden Seitenholme des Rahmenbasiselementes über mindestens eine sich in Fahrzeugquerrichtung erstreckende beispielsweise metallische Querstrebe miteinander verbunden sein. Eine solche Querstrebe, die in Höhe der B-Säulen des Fahrzeugaufbaus liegen kann, ist gegebenenfalls erforderlich, wenn das betreffende Fahrzeugdach einen ersten im Bereich der Vordersitze liegenden Dachdurchsichtbereich und einen zweiten, im Bereich der Fondsitze liegenden Dachdurchsichtbereich aufweist. Der hintere Dachdurchsichtbereich kann dann beispielsweise mittels eines Rollos abgeschattet werden, wobei an den Seitenholmen Führungsbahnen für die seitlichen Enden eines Zugspriegels des Rollos ausgebildet sein können. Diese Führungsbahnen können an dem Kunststoff des Rahmenbasiselementes direkt ausgeformt sein.

Des Weiteren kann an dem im Bereich eines Seitenholms des Rahmenbasiselementes angeordneten Einlegeteil eine Crash-Konsole befestigt sein, die im Bereich einer B-Säule mit der betreffenden Fahrzeugkarosserie verbunden ist. Eine derartige Crash-Konsole kann die Steifigkeit und Stabilität des Fahrzeugsaufbaus im Bereich der betreffenden B-Säule erhöhen.

Ferner sind zur Führung des Dachdeckelelementes an den Seitenholmen des Rahmenbasiselementes als Aluminiumstrangpressprofile ausgebildete Führungsschienen integriert . Diese werden in den die Einlegeteile aufweisenden Bereichen des Rahmenbasiselements gelagert und sind im Bereich der Einlegeteile und/oder im Bereich des Kunststoffs des Rahmenbasiselementes fixiert.

Um die Dichtigkeit des Rahmens zu erhöhen und das Adhäsionsverhalten des zur Herstellung des Rahmenbasiselements eingesetzten Kunststoffs an dem Einlegeteil zu verbessern, kann das Einlegeteil eine Kunststoffbeschichtung aufweisen. Die Kunststoffbeschichtung bildet auch einen Korrosionsschutz für ein aus Metall gefertigtes Einlegeteil, insbesondere im Bereich von dessen Kanten.

In vorteilhafter Weise ist es bei einem erfindungsgemäß ausgebildeten Rahmen auch möglich, an dem Rahmenbasiselement einen vorderen und/oder hinteren Windlauf der Fahrzeugkarosserie zu integrieren, der mit einem entsprechenden Einlegeteil mit Profilierung verstärkt ist, in welche eine spritzgegossene Rippenstruktur des Rahmenbasiselements eingreifen kann. Der betreffende Windlauf wird mithin direkt beim Herstellungsprozess des Rahmens für das Schiebedach bzw. Schiebehebedach in einem Prozessschritt mit ausgeformt. Bei der Montage des Rahmens müssen die Enden des betreffenden Windlaufs dann nur noch mit den jeweiligen Säulen, d. h. mit den A-, C- bzw. D-Säulen des Fahrzeugaufbaus verbunden werden.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Rahmens nach der Erfindung ist in der Zeichnung schematisch vereinfacht dargestellt und wird in der nachfolgenden Beschreibung näher erläutert. Es zeigt
- Fig. 1: einen Dachbereich eines Kraftfahrzeugs mit einem erfindungsgemäß ausgelegten Dachrahmen;
- Fig. 2: eine perspektivische Unteransicht des Dachrahmens in Alleinstellung;
- Fig. 3: einen Schnitt durch einen Seitenholm des Dachrahmens entlang der Line III-III in Fig. 2;
- Fig. 4: ein Einlegeteil des Dachrahmens mit einer in dieses eingreifenden Kunststoffkreuzrippenstruktur.

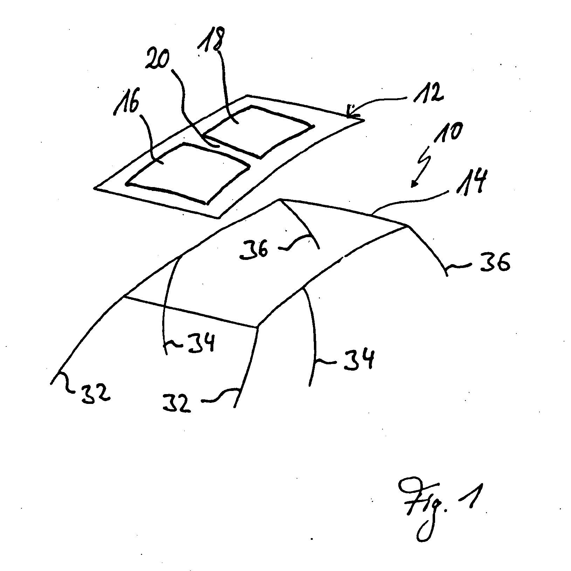

In Fig. 1 ist ein Kraftfahrzeug 10 dargestellt, das mit einem als Panoramadach ausgebildeten Fahrzeugdach versehen ist. Das Fahrzeugdach weist hierzu einen Dachrahmen 12 auf, der ein von oben auf einen Karosserierahmen 14 montierten Rahmen ist, mithin als sogenannter Top-Load-Rahmen ausgebildet ist und einen Schiebedachrahmen des Kraftfahrzeugs 10 darstellt.

Zur Ausbildung eines Panoramadachs, das sich in Fahrzeuglängsrichtung über den gesamten Innenraum des Kraftfahrzeugs 10 erstreckt, weist der Dachrahmen einen vorderen Dachausschnitt 16 und einen hinteren Dachausschnitt 18 auf. Der vordere Dachausschnitt 16 und der hintere Dachausschnitt 18 sind durch eine Querstrebe 20 voneinander getrennt. Der vordere Dachausschnitt 16 ist mittels eines nicht näher dargestellten Deckelelementes wahlweise verschließbar bzw. zumindest teilweise freigebbar. Der hintere Dachausschnitt 18 ist mittels eines starr montierten transparenten Glas- oder Polycarbonatscheibenelementes überdeckt. Beide Dachausschnitte 16 und 18 können jeweils mittels eines hier ebenfalls nicht näher dargestellten Rollos abgeschattet werden.

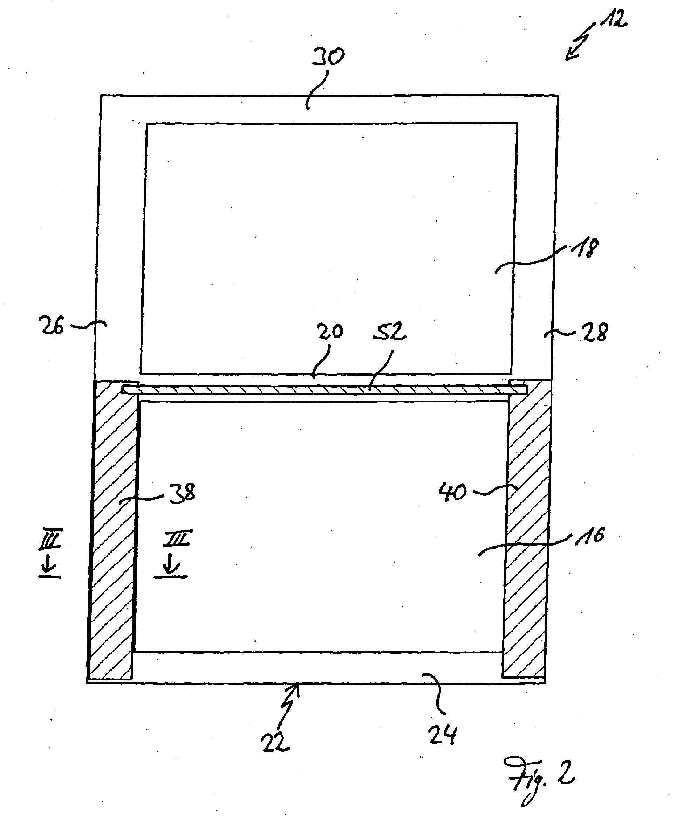

Der in Fig. 2 in Alleinstellung dargestellte Rahmen 12 umfasst ein einstückiges Rahmenbasiselement 22, das ein Trägerelement darstellt und ein Rahmenvorderteil 24, zwei sich in Fahrzeuglängsrichtung erstreckende Seitenholme 26 und 28, ein Rahmenhinterteil 30 sowie die Mittelstrebe 20 umfasst. Das Rahmenvorderteil 24 ist im Bereich von A-Säulen 32, die Querstrebe 20 ist im Bereich von B-Säulen 34, und das Rahmenhinterteil 30 ist im Bereich von C-Säulen 36 des Fahrzeugsaufbaus angeordnet.

Beispielsweise im Bereich des Rahmenvorderteils ist ein Antriebsmotor für das Deckelelement zum Öffnen und Verschließen der vorderen Dachöffnung 16 angeordnet, welches im Bereich der Seitenholme 26 und 28 seitlich geführt ist. Ein Antriebsmotor für die beiden Rollos kann im Bereich der die beiden Seitenholme 26 und 28 verbindenden Querstrebe 20 angeordnet sein.

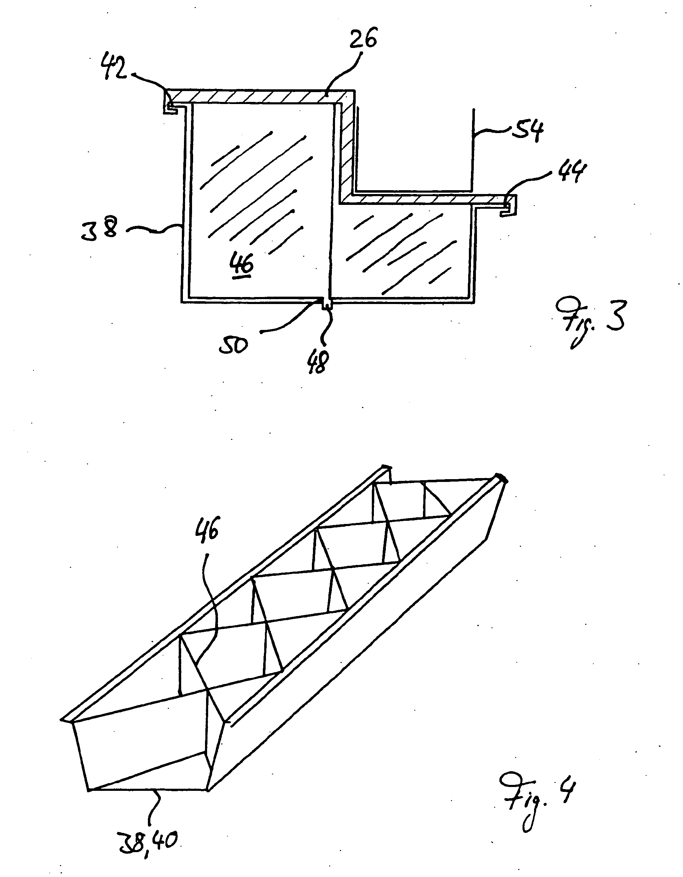

Das Rahmenbasiselement 22 stellt ein Kunststoffspritzgießteil dar. Zur Erhöhung der Steifigkeit dieses Kunststoffspritzgießteils ist im Bereich der Seitenholme 26 und 28 jeweils ein aus einem Metallblech bestehendes Einlegeteil 38 bzw. 40 vorgesehen, das sich zwischen dem Rahmenvorderteil 24 und der Querstrebe 20 erstreckt und als Verstärkungselement dient. Die Einlegeteile 38 und 40 sind jeweils als Tiefziehteil ausgebildet und weisen, wie insbesondere den Figuren 3 und 4 zu entnehmen ist, eine Profilierung auf, die im Querschnitt U-profilartig ausgebildet ist. Die Einlegeteile 38 und 40 sind mithin jeweils schalen- bzw. profilförmig ausgebildet. Alternativ ist auch denkbar, Einlegeteile über die gesamte Länge der Seitenholme vorzusehen.

Die Einlegeteile 38 und 40 sind jeweils dadurch an dem Kunststoff des Rahmenbasiselementes 22 verankert, dass deren Ränder 42 und 44 kederartig von dem Kunststoff des Rahmenbasiselementes 22 übergriffen sind.

Des Weiteren weist der Kunststoff des Rahmenbasiselementes 22 eine Kreuzrippenstruktur 46 auf, die, wie Fig. 4 zu entnehmen ist, in die Profilierung des jeweiligen Einlegeteils 38 bzw. 40 eingespritzt ist und so die Struktur des als Verstärkungselement dienenden Einlegeteils 38 bzw. 40 stabilisiert.

Des Weiteren weist die Rippenstruktur 46 Fußpunkte 48 auf, die in Löcher 50 des jeweiligen Einlegeteils 38 bzw. 40 eingreifen und so das Einlegeteil 38 bzw. 40 zusätzlich an dem Kunststoff des Rahmenbasiselementes 22 verankern.

Zur weiteren Stabilisierung und Versteifung der Dachstruktur sind die Einlegeteile 38 und 40 im Bereich der Querstrebe 20 mittels eines metallischen Querträgers 52 miteinander verbunden, der somit eine Mittelverstärkung für die Dachkonstruktion darstellt.

Der Rahmen nach der Erfindung vereinigt als Verbundbauteil die positiven Eigenschaften von Kunststoff und die Festigkeits- bzw. Stabilitätsvorteile von Stahl, aus dem die Einlegeteile 38 und 40 gefertigt sind. Einlegeteile sind nur an den Stellen eingesetzt, an denen besondere Anforderungen an das Crash-Verhalten des betreffenden Fahrzeugs gestellt werden, was bei dem vorliegenden Beispiel im Bereich zwischen den sogenannten A-Säulen 32 und den sogenannten B-Säulen 34 der Fall ist. Auch kann aufgrund der Einbettung der Einlegeteile in Kunststoff gegebenenfalls auf eine so genannte KTL-Oberflächenbeschichtung zur Verbesserung des Korrosionsverhaltens der Blechteile verzichtet werden.

### Bezugszeichen

- 10: Kraftfahrzeug
- 12: Rahmen
- 14: Karosserierahmen
- 16: vorderer Dachausschnitt
- 18: hinterer Dachausschnitt
- 20: Querstrebe
- 22: Rahmenbasiselement
- 24: Rahmenvorderteil
- 26: Seitenholm
- 30: Rahmenhinterteil
- 32: A-Säulen
- 34: B-Säulen
- 36: C-Säulen
- 38: Einlegeteil
- 40: Einlegeteil
- 42: Rand
- 44: Rand
- 46: Rippenstruktur
- 48: Fußpunkt
- 50: Loch
- 52: Querträger
- 54: Führungsschiene

## Patentansprüche

1. Rahmen für ein Fahrzeug-Schiebedach bzw. -Schiebehebedach, zumindest umfassend ein einstückiges Rahmenbasiselement (22), das als Kunststoffspritzgießteil ausgebildet ist und zumindest ein Rahmenvorderteil (24) und zwei in Fahrzeuglängsrichtung ausgerichtete Seitenholme (26, 28) umfasst, wobei das Rahmenbasiselement (22) als Verbundbauteil ausgebildet ist und an den Seitenholmen (26, 28) jeweils eine Führungsschiene (54) integriert ist, **dadurch gekennzeichnet, dass** die Seitenholme (26, 28) jeweils mit mindestens einem als Verstärkungselement dienenden, profil- oder schalenförmigen Einlegeteil (38, 40) versehen sind, an das der Kunststoff (46) des spritzgegossenen Rahmenbasiselementes (22) angespritzt ist, und die Führungsschienen (54) in den die Einlegeteile (38, 40) aufweisenden Bereichen des Rahmenbasiselements (22) gelagert sind.

2. Rahmen nach Anspruch 1, **dadurch gekennzeichnet, dass** eine spritzgegossene Rippenstruktur (46) des spritzgegossenen Rahmenbasiselementes (22) in die Profilierung des Einlegeteils (38, 40) eingreift.

3. Rahmen nach Anspruch 1 oder 2, **dadurch gekennzeichnet, dass** das mindestens eine Einlegeteil (38, 40) aus Metall gefertigt ist.

4. Rahmen nach einem der Ansprüche 1 bis 3, **dadurch gekennzeichnet, dass** der Kunststoff des Rahmenbasiselements (22) glasfaserverstärkt ist.

5. Rahmen nach einem der Ansprüche 1 bis 4, **dadurch gekennzeichnet, dass** die Rippenstruktur (46) eine Kreuz- oder Zickzackrippenstruktur ist.

6. Rahmen nach einem der Ansprüche 1 bis 5, **dadurch gekennzeichnet, dass** der Kunststoff des Rahmenbasiselements (22) im Bereich mindestens eines seitlichen Randes (42, 44) des Einlegeteils bzw. der Einlegeteile (38, 40) kederartig ausgebildet ist und den betreffenden Rand übergreift.

7. Rahmen nach einem der Ansprüche 1 bis 6, **dadurch gekennzeichnet, dass** der Kunststoff des Rahmenbasiselements (22) im Bereich mindestens eines Randes des Einlegeteils bzw. der Einlegeteile mindestens eine diesen Rand übergreifende Kunststoffklammer umfasst.

8. Rahmen nach einem der Ansprüche 1 bis 7, **dadurch gekennzeichnet, dass** das Einlegeteil (38, 40) Löcher (48) aufweist, die als Ankerpunkte für den Kunststoff des Rahmenbasiselementes (22) dienen.

9. Rahmen nach Anspruch 2, **dadurch gekennzeichnet, dass** die Einlegeteile (38, 40) der beiden Seitenholme (26, 28) über mindestens einen sich in Fahrzeugquerrichtung erstreckenden metallischen Querträger (52) miteinander verbunden sind.

10. Rahmen nach einem der Ansprüche 1 bis 9, **dadurch gekennzeichnet, dass** an dem Rahmenbasiselement ein vorderer und/oder hinterer Windlauf der Fahrzeugkarosserie integriert sind bzw. ist.

## Claims

1. Frame for a vehicle sliding roof or tilting-sliding roof, at least comprising a single-piece frame base element (22) which is formed as a plastic injection-moulded part and which comprises at least one frame front part (24) and two side beams (26, 28) aligned in the vehicle longitudinal direction, with the frame base element (22) being formed as a composite component and with in each case one guide rail (54) being integrated on the side beams (26, 28), **characterized in that** the side beams (26, 28) are provided in each case with at least one profiled or shell-shaped inlay part (38, 40) which serves as a reinforcement element and onto which the plastic (46) of the injection-moulded frame base element (22) is injection-moulded, and the guide rails (54) are mounted in those regions of the frame base element (22) which have the inlay parts (38, 40).

2. Frame according to Claim 1, **characterized in that** an injection-moulded rib structure (46) of the injection-moulded frame base element (22) engages into the profiling of the inlay part (38, 40).

3. Frame according to Claim 1 or 2, **characterized in that** the at least one inlay part (38, 40) is produced from metal.

4. Frame according to one of Claims 1 to 3, **characterized in that** the plastic of the frame base element (22) is reinforced with glass fibre.

5. Frame according to one of Claims 1 to 4, **characterized in that** the rib structure (46) is a crossed or zig-zag rib structure.

6. Frame according to one of Claims 1 to 5, **characterized in that** the plastic of the frame base element (22) is formed in the manner of a weatherstrip in the region of at least one lateral edge (42, 44) of the inlay part or inlay parts (38, 40) and engages over the edge in question.

7. Frame according to one of Claims 1 to 6, **characterized in that** the plastic of the frame base element (22) comprises, in the region of at least one edge of the inlay part or inlay parts, at least one plastic clamp which engages over said edge.

8. Frame according to one of Claims 1 to 7, **characterized in that** the inlay part (38, 40) has holes (48) which serve as anchoring points for the plastic of the frame base element (22).

9. Frame according to Claim 2, **characterized in that** the inlay parts (38, 40) of the two side beams (26, 28) are connected to one another by means of at least one metallic crossmember (52) which extends in the vehicle transverse direction.

10. Frame according to one of Claims 1 to 9, **characterized in that** a front and/or rear cowl of the vehicle body are/is integrated on the frame base element.

## Revendications

1. Cadre pour un toit ouvrant coulissant de véhicule ou un toit ouvrant coulissant et relevable, comprenant au moins un élément de base de cadre d'une seule pièce (22), qui est réalisé sous forme de pièce moulée par injection de plastique et au moins une partie avant de cadre (24) et deux longerons latéraux (26, 28) orientés dans la direction longitudinale du véhicule, l'élément de base de cadre (22) étant réalisé sous forme de composant composite et un rail de guidage (54) étant à chaque fois intégré aux longerons latéraux (26, 28), **caractérisé en ce que** les longerons latéraux (26, 28) sont pourvus à chaque fois d'au moins une pièce encastrée (38, 40) en forme de profilé ou de coque et servant d'élément de renforcement, sur laquelle est pulvérisé le plastique (46) de l'élément de base de cadre (22) moulé par injection, et les rails de guidage (54) sont montés dans les régions de l'élément de base de cadre (22) qui présentent les pièces encastrées (38, 40).

2. Cadre selon la revendication 1, **caractérisé en ce qu'**une structure nervurée moulée par injection (46) de l'élément de base de cadre moulé par injection (22) vient en prise dans le profilage de la pièce encastrée (38, 40).

3. Cadre selon la revendication 1 ou 2, **caractérisé en ce que** l'au moins une pièce encastrée (38, 40) est fabriquée en métal.

4. Cadre selon l'une quelconque des revendications 1 à 3, **caractérisé en ce que** le plastique de l'élément de base de cadre (22) est renforcé par des fibres de verre.

5. Cadre selon l'une quelconque des revendications 1 à 4, **caractérisé en ce que** la structure nervurée (46) est une structure nervurée croisée ou en zigzag.

6. Cadre selon l'une quelconque des revendications 1 à 5, **caractérisé en ce que** le plastique de l'élément de base de cadre (22) est réalisé sous forme de bourrelet dans la région d'au moins un bord latéral (42, 44) de la pièce encastrée ou des pièces encastrées (38, 40) et vient en prise par le dessus avec le bord concerné.

7. Cadre selon l'une quelconque des revendications 1 à 6, **caractérisé en ce que** le plastique de l'élément de base de cadre (22) comprend, dans la région d'au moins un bord de la pièce encastrée ou des pièces encastrées au moins une pince en plastique venant en prise par le dessus avec ce bord.

8. Cadre selon l'une quelconque des revendications 1 à 7, **caractérisé en ce que** la pièce encastrée (38, 40) présente des trous (48) qui servent de points d'ancrage pour le plastique de l'élément de base de cadre (22).

9. Cadre selon la revendication 2, **caractérisé en ce que** les pièces encastrées (38, 40) des deux longerons latéraux (26, 28) sont connectées l'une à l'autre par le biais d'au moins un support transversal métallique (52) s'étendant dans la direction transversale du véhicule.

10. Cadre selon l'une quelconque des revendications 1 à 9, **caractérisé en ce qu'**un auvent avant et/ou arrière de la carrosserie du véhicule est ou sont intégrés à l'élément de base de cadre.
